# EUROPÄISCHE PATENTSCHRIFT

(11) **EP 2 536 785 B1**
(45) Veröffentlichungstag und Bekanntmachung des Hinweises auf die Patenterteilung: **27.04.2016**
(21) Anmeldenummer: 10705555.0
(22) Anmeldetag: 19.02.2010
(51) Int. Cl.: C08L 27/06, C08L 97/02

(54) **HOLZIMITAT**
IMITATION WOOD
IMITATION DE BOIS

(43) Veröffentlichungstag der Anmeldung: 26.12.2012
(73) Patentinhaber: Patenta Asia Ltd., Hong Kong (CN)
(72) Erfinder: DUNA, Bernhard, 85598 Baldham (DE); SIU PAK TAK, Antonio, Singapore 30931 (SG)
(74) Vertreter: Schneider, Michael
(86) Internationale Anmeldenummer: PCT/EP2010/001064
(87) Internationale Veröffentlichungsnummer: WO 2011/100995

(56) Entgegenhaltungen:
- WO-A1-2010/003403
- US-A- 6 011 091
- DATABASE WPI Week 200876 Thomson Scientific, London, GB; AN 2008-M81705 XP002596002 & CN 101 074 323 A (JIN X) 21. November 2007 (2007-11-21)
- CRESPO, J. E. ET AL: "Study of the mechanical and morphological properties of plasticized PVC composites containing rice husk fillers" JOURNAL OF REINFORCED PLASTICS AND COMPOSITES, Bd. 27, Nr. 3, 2008, Seiten 229-243, XP002596003 ISSN: 0731-6844

## Beschreibung

Die Erfindung bezieht sich auf die Herstellung eines vom Ansehen und der Haptik her holzähnlichen Werkstoffes bzw. Holzimitats.

Die bekannten Kunststoffhölzer sind bzw. werden aus einer Mischung aus Holz und PE/PP (Polyethylen/Polypropylen) hergestellt (sog. "WPCs" = "Wood Plastic Composites"). Diese Werkstoffe werden vorwiegend ohne eine abschließende Oberflächenbehandlung beispielsweise für die Herstellung von Bodendielen im Außenbereich verwendet. Die bekannten Kunststoffhölzer können nicht oder nur mit größerem Aufwand lackiert werden. Des weiteren haben sie den Nachteil, dass sie sich wegen des PE-Anteils sehr plastisch anfühlen. Aus diesen Gründen sind die bekannten Kunststoffhölzer für die Möbelherstellung kaum geeignet, schon gar nicht für Massiv-Möbel.

WO 2010/003403 A1 betrifft eine Zusammensetzung zur Herstellung eines Holzimitats, die ein Gemisch aus 30-40 Gew.-% PVC-Harz und 30-40 Gew.-% Reis- und/oder Erdnuss-Schalen enthält.

Der Erfindung liegt die Aufgabe zugrunde, einen holzähnlichen Werkstoff vorzuschlagen, der die aufgezeigten Nachteile vermeidet, und der aus Gründen der Schonung der Umwelt, im besonderen des Waldes, primär den Einsatz von Holz grundsätzlich vermeidet.

Die erfindungsgemäße Aufgabe wird gelöst durch eine Zusammensetzung zur Herstellung eines Holzimitat wie sie in Anspruch 1 definiert ist.

Die Erfindung betrifft ferner ein durch Extrusion einer erfindungsgemäßen Zusammensetzung hergestelltes Holzimitat wie es in Anspruch 10 definiert ist.

Außerdem gibt die Erfindung die in Anspruch 16 definierten Verwendungen des erfindungsgemäßen Holzimitats an.

Vorteilhafte und/oder bevorzugte Ausführungsformen der Erfindung sind Gegenstand der Unteransprüche.

Die erfindungsgemäße Zusammensetzung zur Herstellung eines Holzimitats enthält ein Gemisch aus 30 - 40 Gew.-% PVC-Harz (PVC = Polyvinylchlorid) und 30 - 40 Gew.-% Pulver aus Reisschalen bzw. -hülsen und/oder Erdnuss-Schalen bzw. -hülsen mit einer Teilchengröße von 0,42- 0,25 mm (40 - 60 mesh). Die Bezeichnung "mesh" kennzeichnet die Maschenweite bei Sieben und dient damit als Maß für die Angabe von Partikel- bzw. Korngrößen. Je kleiner der mesh-Wert, desto größer ist die Teilchengröße des zu beschreibenden Schüttguts. Für die Umrechnung von mesh-Werten in Maschenweiten in mm gibt es Tabellen, beispielsweise vom US Bureau of Standards.

Das verwendete PVC-Material unterliegt keinen besonderen Beschränkungen. Insbesondere kann auch PVC-Recyclingmaterial verwendet werden. Beispielsweise eignet sich eine PVC-Harz-Suspension mit einem K-Wert von 60 - 70. Unter dem K-Wert versteht man eine Zahl, die aus Messungen der Viskosität verdünnter Lösungen eines Polymers berechnet wird und ein Maß für den Polymerisationsgrad bzw. die Molekülgröße ist. Der K-Wert wird zur Harzspezifikation verwendet.

Die verwendeten Reisschalen bzw. Erdnuss-Schalen unterliegen ebenfalls keinen besonderen Beschränkungen, insbesondere nicht in bezug auf bestimmte Reis- oder Ernuss-Sorten. Reissschalen ergeben bessere Ergebnisse und sind daher bevorzugt. Sie lassen sich sehr gut pulverisieren und optimal mit dem PVC-Harz vermischen. Außerdem enthalten sie weniger Lignin (nur etwa 5 %) und bleichen daher unter Witterungseinfluss (Sonne, Regen) weniger oder garnicht aus.

Bei einer Ausführungsform der erfindungsgemäßen Zusammensetzung zur Herstellung eines Holzimitats sind das PVC-Harz und das Reis- und/oder Erdnuss-Schalenpulver etwa im Verhältnis 50:50 gemischt. Die Mischungsreihenfolge ist dabei generell beliebig.

Bei einer weiteren Ausführungsform der erfindungsgemäßen Zusammensetzung zur Herstellung eines Holzimitats ist/sind dem Gemisch aus PVC-Harz und/oder Reis- und/oder Erdnuss-Schalenpulver auch noch einer oder mehrere der folgenden Zusatzstoffe bzw. Additive beigemischt: chemische(r) Binder auf Thermoplastkunststoffbasis (z.B. Poly(meth)acrylat), Farbpigment(e) (z.B. Kreide, Titandioxid, Rußschwarz, rotes Eisenoxid, Ocker), Schmier- bzw. Gleitmittel (z.B. Fettsäuresalze wie Calciumstearat, Fettsäureester, Fettsäureamide, Paraffinwachse, Polyethylenwachse, mikrokristallines Parafin), Calciumcarbonat und PVC-Verarbeitungshilfsmittel ("processing aids") (z.B. Wärme- und Witterungsstabilisatoren, Antioxidantien, Alterungsschutzmittel, Lichtstabilisatoren, Ultraviolettabsorber, Antistatikmittel). Die vorgenannten Zusatzstoffe sind im Fachhandel erhältlich. Die zusätzlichen Komponenten können gleichzeitig mit dem PVC-Harz und den Reis- bzw. Erdnussschalenpulver oder auch in mehreren Stufen damit vermischt werden.

Eine weitere Ausführungsform der erfindungsgemäßen Zusammensetzung zur Herstellung eines Holzimitats enthält ein Gemisch aus 30 - 40 Gew.-%, beispielsweise 31 - 37 Gew.-%, PVC-Harz, 30 - 40 Gew.-%, beispielsweise 33 - 36 Gew.-%, Reis- und/oder Erdnuss-Schalenpulver mit einer Teilchengröße von 0,42- 0,25 mm (40 - 60 mesh), 8 - 12 Gew.%, beispielsweise 7 - 9 Gew.-%, chemische(r) Binder auf Thermoplastkunststoffbasis, 0,5 - 1 Gew.-% Farbpigment(e), 2 - 4 Gew.-% Schmier- bzw. Gleitmittel, 12 - 18 Gew.-%, beispielsweise 11 - 15 Gew.-%, Calciumcarbonat und 8 - 12 Gew.-% PVC-Verarbeitungshilfsmittel.

Der chemische Binder auf Thermoplastkunststoffbasis hat beispielsweise die Funktion, Feuchtigkeit oder Lösungsmittel von Naturstofffasern zu entfernen und verbindet bzw. vernetzt sich stark mit dem "nonwoven web" bzw. Netzwerk aus Naturstofffasern. PVC-Verarbeitungshilfsmittel ("PVC processing aids") können die Verschmelzung ("Fusion") beschleunigen, die Schmelzstärke bw. Zähigkeit der Schmelze ("melt strenght") verbessern, Oberflächendefekte eliminieren und das "place out" verringern. Außerdem können sie im Produktionsprozess die Metallablösungseigenschaften verstärken. Geeignete Binder und Verarbeitungshilfsmittel sind dem Fachmann auf dem Gebiet der PVC-Verarbeitung geläufig und im Handel in großer Auswahl verfügbar.

Bei einer weiteren Ausführungsform der erfindungsgemäßen Zusammensetzung zur Herstellung eines Holzimitats haben die PVC-Harzteilchen und das Reis- bzw. ErdnussSchalenpulver etwa die gleiche Korngröße.

Das erfindungsgemäße Holzimitat ist durch Extrusion einer erfindungsgemäßen Zusammensetzung herstellbar. Das durch Extrusion erhaltene Produkt hat z.B. die Form einer Platte oder ist z.B. ein Profil.

Das angewendete Extrusionsverfahren unterliegt keinen besonderen Beschränkungen. Es können beliebige handelsübliche Extruder eingesetzt werden. Die Bedienung erfolgt nach den Herstellerinstruktionen. Dem Fachmann ist klar, dass die erfindungsgemäße Zusammensetzung unter den Extrusionsbedingungen (z.B. Temperatur und Druck) ausreichend homogenisiert und verflüssigt werden muß, so dass sie durch die Extruderdüse gepresst werden kann. Geeignete Extrusionsbedingungen sind entweder die vom Hersteller spezifizierten oder werden vom Fachmann durch einfache Routineversuche ermittelt. Die Geometrie der verwendeten Extrusionsdüse bestimmt bekanntermaßen die Form bzw. das Profil des erhaltenen Extrusionsprodukts. Das durch Extrusion erhaltene Produkt kann beispielsweise die Form einer Platte haben oder ein Profil sein.

Beispielsweise wird das PVC-Harz in einem Hochgeschwindigkeitsmischer mit getrocknetem Reisschalenpulver (Teilchengröße 40 - 60 mesh, Feuchtigkeitsgehalt z.B. 0,5 bis 1,0 %) und optional Füllstoff (z.B. Calciumcarbonat) 5 min bei 125 - 140 °C vermischt. Die optionalen Additive wie Farbpigment, Stabilisator, Verarbeitungshilfsmittel, Gleitmittel (z.B. Epoxy-Soyaöl, Wachs) werden in einem kleinen Mischer/Blender 10 min durchmischt und dann in den Hochgeschwindigkeitsmischer zu dem Gemisch aus PVC-Harz/Reisschalenpulver/Füllstoff gegeben. Dann wird das gesamte Gemisch weitere 10 min homogen durchmischt. Schließlich wird das Gemisch in einem Kühltank ca. 30 min abkühlen gelassen und dann mit einem Doppel- bzw. Zwillingsschneckenextruder bei einer geregelten Temperatur im Bereich von beispielsweise 150 - 210 °C oder 160 - 175 °C zu dem erfindungsgemäßen Holzimitat als Endprodukt extrudiert.

Vorzugsweise wird nach der Extrusion die auf der Oberfläche des Extrusionsprodukts gebildete Kunststoffhaut entfernt. Dadurch entsteht die sehr holzähnliche Haptik und Optik des erfindungsgemäßen Holzimitats. Durch die Entfernung der Kunststoffhaut hat das erfindungsgemäße Holzimitat auch eine gute Rutschfestigkeit. Der Farbton des Holzimitats kann durch die in der zu seiner Herstellung verwendeten Zusammensetzung enthaltenen Farbpigmente gesteuert werden. Praktischerweise wird kein intensiver Farbton eingestellt, sondern ein vergleichsweise eher blasserer. Der endgültige gewünschte Farbton wird dann durch Lackieren oder Lasieren des aus dem Holzimitat hergestellten Produkts eingestellt. Dadurch erspart man sich die Herstellung und Lagerung einer Vielzahl von Holzimitaten mit unterschiedlichen Farbtönen.

Beispielsweise kann die Kunststoffhaut durch Abschleifen entfernt werden. Das Abschleifen kann z.B. mit einem Schleifmaterial wie Sand- oder Schleifpapier mit einer Körnung im Bereich von 24 bis 60 durchgeführt werden, beispielsweise unter Verwendung eines elektrisch betriebenen Handschleifers. Bei der Körnung steht ein kleinerer Zahlenwert für eine gröbere Körnung und ein höherer Zahlenwert für eine feinere Körnung. Eine Körnung von 24 ist eher grob und eignet sich z.B. zum Entfernen von Leim- oder Lackschichten, während eine Körnung von 60 eher mittel ist und beispielsweise zum groben Vorschleifen roher Holzflächen verwendet wird. Die geeignete Körnung wählt der Fachmann nach Maßgabe der praktischen Gegebenheiten bzw. des zu erzielenden Effekts.

Alternativ kann die Kunststoffhaut auch auf andere Weise entfernt werden, beispielsweise durch Abhobeln oder Sandstrahlen.

Bei einer weiteren Ausführungsform des erfindungsgemäßen Holzimitats wird dessen Oberfläche, ggf. nach einer entsprechenden Vorbehandlung (z.B. Grundierung), lackiert oder lasiert bzw. geölt. Zum Lackieren eignen sich beispielsweise wasserbasierte einkomponentige Lacke. Für die Extrembenutzung eignen sich besonders zweikomponentige Lacke.

Je nach Pigmentierung und Oberflächentönung lassen sich verschiedene Holzoptiken und - haptiken realisieren, z.B. von Tropenholz wie Burma Teak, Siam Teak, Java Teak oder Aged teak.

Das erfindungsgemäße Holzimitat kann als Baumaterial, Fußbodenmaterial, Wandmaterial, Deckenmaterial, für Schwellen, Furniere, Fensterflügel, Zäune, Möbel, Fahrzeuge oder Gehäuse für elektrische Geräte verwendet werden.

Das erfindungsgemäße Holzimitat bzw. der erfindungsgemäße Ersatzwerkstoff für Holz hat eine sehr holzähnliche Optik wie auch Haptik, und bietet gegenüber den allermeisten Holzarten in vielerlei Hinsicht wesentlich verbesserte Eigenschaften.

Aufgrund der polaren Eigenschaften des verwendeten PVCs kann die Oberfläche des erfmdungsgemäßen Holzimitats problemlos geölt, lasiert oder lackiert werden, so dass sich der neue Werkstoff besonders eignet für die Herstellung von Möbeln, Zäunen, Furnieren und sogar für Ständer von Sonnenschirmen. Die polaren Eigenschaften erlauben auch eine leichte Verklebbarkeit und verleihen antistatische Eigenschaften. Konventionelle Holz/PE-Composite (WPCs) sind wegen der nichtpolaren Eigenschaften von PE nicht oder nur sehr schwer lackierbar, nicht verklebbar und nicht antistatisch.

Durch seine Stabilität, Formbeständigkeit und absolute Widerstandsfähigkeit gegenüber Feuchtigkeitseinflüssen wie Regen ist der erfindungsgemäße Werkstoff den konventionellen Holz/PE-Compositen (WPCs) und auch vielen Holzarten weit überlegen. Aus dem erfindungsgemäßen Holzimitat hergestellte Profile sind nahezu wasserdicht. Das verwendete PVC ist nicht hygroskopisch und nimmt kein Wasser auf und verhindert so das Eindringen von Wasser durch eine Verletzung der Oberfläche, so dass keine Unterwanderung von aufgetragenen Lackschichten erfolgt und keine Lackabplatzungen auftreten. Das erfindungsgemäße Holzimitat ist daher auch dimensionsstabil, so dass eine Verformung auf natürlichem Wege (z.B. durch Aufquellen oder Schwinden) nicht möglich ist. Konventionelle Holz/PE-Composite quellen dagegen unter Feuchtigkeitseinfluß. Lacke haften nicht mehr, weil das eindringende Wasser diese unterwandert und dadurch ablöst.

Das erfindungsgemäße Holzimitat eignet sich daher besonders für Möbel, die im maritimen Bereich, in Meeres- und Seenähe oder in Nassbereichen (z.B. Schwimmbad) eingesetzt werden, oder als Outdoor-Parkett oder Schiffsdeck. Pilzbefall oder Insektenbefall tritt nicht auf.

Aufgrund der hervorragenden Festigkeit ist das Einschlagen von Nägeln oder das Eindrehen von Schrauben in das erfindungsgemäße Holzimitat wie bei üblichen Holzmaterialien möglich. Auch die maschinelle Bearbeitung ist problemlos, so dass einfaches Durchschneiden mit einer Säge, Bohren, Fräsen, Schleifen oder sogar Sandstrahlen möglich ist. Das erfindungsgemäße Holzimitat reißt nicht und splittert nicht, und Schnittabfälle sind zu 100 % recyclebar.

Die Reis- und/oder Erdnuss-Schalen fungieren als eine Art "aktiver Füllstoff' und verleihen dem erfindungsgemäßen Holzimitat für die meisten Anwendungsgebiete verbesserte Bearbeitungseigenschaften. Die thermische Ausdehnung ist geringer und es wird die Konsistenz und Haptik von Naturholz erzielt, wodurch das erfindungsgemäße Holzimitat konventionellen "Wood Plastic Composites" oder auch reinem PVC überlegen ist.

Konventionelle Holz/PE-Composite neigen wegen des hohen Ligningehalts im verwendeten Holz durch den Einfluss von Sonne und Regen, die das Lignin zersetzen, zum Vergrauen und Vergilben und sind dadurch schnell unansehnlich. Das erfindungsgemäße Holzimitat enthält dagegen sehr wenig Lignin, so dass es nicht vergilbt.

Auch andere Eigenschaften des erfindungsgemäßen Holzimitats wie Schall- oder Wärmedämmung sind den charakteristischen Eigenschaften von natürlichem Holz ähnlich.

Bei der Herstellung des erfindungsgemäßen Holzimitats kann dem Gemisch aus PVC-Harz und Erdnuss- und/oder Reisschalenpulver auch in gewissem Maße recycletes erfindungsgemäßes Holzimitat, z.B. Schnittabfälle, beigemengt werden, was z.B. geschehen kann, wenn solches zur Entsorgung zur Verfügung steht.

## Patentansprüche

1. Zusammensetzung zur Herstellung eines Holzimitats, die ein Gemisch aus 30 - 40 Gew.-% PVC-Harz und 30 - 40 Gew.-% Reis- und/oder ErdnussSchalenpulver mit einer Teilchengröße von 0,42- 0,25 mm (40 - 60 mesh) enthält.

2. Zusammensetzung zur Herstellung eines Holzimitats nach Anspruch 1, wobei das PVC-Harz und das Reis- und/oder Erdnuss-Schalenpulver etwa im Verhältnis 50:50 gemischt sind.

3. Zusammensetzung zur Herstellung eines Holzimitats nach den Ansprüchen 1 oder 2, wobei dem Gemisch aus PVC-Harz und/oder Reis- und/oder ErdnussSchalenpulver auch noch einer oder mehrere der folgenden Zusatzstoffe beigemischt ist/sind: chemische(r) Binder auf Thermoplastkunststoffbasis, Farbpigment(e), Gleit/Schmiermittel, Calciumcarbonat und PVC-Verarbeitungshilfsmittel.

4. Zusammensetzung zur Herstellung eines Holzimitats nach einem der vorstehenden Ansprüche, die ein Gemisch aus 30 - 40 Gew.-% PVC-Harz, 30 - 40 Gew.-% Reis- und/oder Erdnuss-Schalenpulver mit einer Teilchengröße von 0,42-0,25 mm (40 - 60 mesh), 8 - 12 Gew.% chemische(r) Binder auf Thermoplastkunststoffbasis, 0,5 - 1 Gew.-% Farbpigment(e), 2 - 4 Gew.-% Gleit/Schmiermittel, 12 - 18 Gew.-% Calciumcarbonat und 8 - 12 Gew.-% PVC-Verarbeitungshilfsmittel enthält.

5. Zusammensetzung zur Herstellung eines Holzimitats nach Anspruch 4, die 31 - 37 Gew.-% PVC-Harz enthält.

6. Zusammensetzung zur Herstellung eines Holzimitats nach Anspruch 4 oder 5, die 33 - 36 Gew.-% Reis- und/oder Erdnuss-Schalenpulver enthält.

7. Zusammensetzung zur Herstellung eines Holzimitats nach einem der Ansprüche 4 bis 6, die 7 - 9 Gew.-% chemische(n) Binder auf Thermoplastkunststoffbasis enthält.

8. Zusammensetzung zur Herstellung eines Holzimitats nach einem der Ansprüche 4 bis 7, die 11 - 15 Gew.-% Calciumcarbonat enthält.

9. Zusammensetzung zur Herstellung eines Holzimitats nach einem der vorstehenden Ansprüche, wobei die PVC-Harzteilchen und das Reis- bzw. Erdnuss-Schalenpulver etwa die gleiche Korngröße haben.

10. Holzimitat, herstellbar durch Extrusion einer Zusammensetzung nach einem der vorstehenden Ansprüche.

11. Holzimitat nach Anspruch 10, wobei das durch Extrusion erhaltene Produkt die Form einer Platte hat oder ein Profil ist.

12. Holzimitat nach Anspruch 10 oder 11, wobei nach der Extrusion die auf dem Extrusionsprodukt gebildete Kunststoffhaut entfernt wird.

13. Holzimitat nach Anspruch 12, wobei die Kunststoffhaut durch Abschleifen entfernt wird.

14. Holzimitat nach Anspruch 13, wobei das Abschleifen mit einem Schleifmaterial mit einer Körnung im Bereich von 24 bis 60 durchgeführt wird.

15. Holzimitat nach einem der Ansprüche 10 bis 14, dessen Oberfläche lackiert oder lasiert ist.

16. Verwendung eines Holzimitats nach einem der Ansprüche 10 bis 15 als Baumaterial, Fußbodenmaterial, Wandmaterial, Deckenmaterial, für Schwellen, Furniere, Fensterflügel, Zäune, Möbel, Fahrzeuge oder Gehäuse für elektrische Geräte.

17. Verfahren zur Herstellung eines Holzimitats nach Anspruch 10, bei dem:
a) 30-40 Gew.-% PVC-Harz in einem Hochgeschwindigkeitsmischer mit 30-40 Gew.-% Reisschalenpulver mit einer Teilchengröße von 0,42-0,25 mm (40-60 mesh) und gegebenenfalls Füllstoff 5 Minuten bei 125 bis 140 °C vermischt wird,
b) optionale Additive wie Farbpigment, Stabilisator, Verarbeitungshilfsmittel, Gleitmittel in einem kleinen Mischer/Blender 10 Minuten durchmischt werden und dann dieses Gemisch in den Hochgeschwindigkeitsmischer zu dem Gemisch aus Schritt a) gegeben und das komplette Gemisch weitere 10 Minuten homogen durchmischt wird,
c) das Gemisch aus Schritt b) etwa 30 Minuten in einem Kühltank abgekühlt wird, und
d) das Gemisch aus Schritt c) in einem Doppel- bzw. Zwillingsschneckenextruder bei einer geregelten Temperatur im Bereich von 150 bis 210 ° C extrudiert wird.

## Claims

1. Composition for the production of imitation wood containing a mixture of 30-40 wt% of PVC resin and 30-40 wt% of rice shell powder and/or peanut shell powder with a particle size of 0.42 to 0.25 mm (40-60 mesh).

2. Composition for the production of imitation wood according to claim 1, with the PVC resin and the rice and/or peanut shell powder being mixed at a ratio of about 50:50.

3. Composition for the production of imitation wood according to claims 1 or 2, with the mixture of PVC resin and/or rice shell powder and/or peanut shell powder being mixed with one or more of the following additives: chemical binder(s) on thermoplastic plastic base, colored pigment(s), lubricant(s), calcium carbonate and PVC processing aid(s).

4. Composition for the production of imitation wood according to any one of the above claims, comprising a mixture of 30-40 wt% of PVC resin, 30-40 wt% of rice shell poweder and/or peanut shell powder with a particle size of 0.42 to 0.25 mm (40-60 mesh), 8-12 wt% of chemical binder(s) on a thermoplastic plastic base, 0.5-1 wt% of color pigment(s), 2-4 wt% of lubricant(s), 12-18 wt% of calcium carbonate and 8-12 wt% of PVC processing aid(s).

5. Composition for the production of imitation wood according to claim 4 containing 31 to 37 wt% of PVC resin.

6. Composition for the production of imitation wood according to claim 4 or 5 containing 33-36 wt% of rice shell powder and/or peanut shell powder.

7. Composition for the production of imitation wood according to any one of claims 4 to 6, containing 7-9 wt% of chemical binder(s) on a thermoplastic plastic base.

8. Composition for the production of imitation wood according to any one of claims 4 to 7, containing 11-15 wt% of calcium carbonate.

9. Composition for the production of imitation wood according to any one of the above claims, with the PVC resin particles and the rice shell powder and/or peanut shell powder having about the same grain size.

10. Imitation wood producible by extrusion of a composition according to any one of the above claims.

11. Imitation wood according to claim 10, with the product obtained by extrusion having the form of a plate or being a profile.

12. Imitation wood according to claim 10 or 11, with the plastic skin formed on the extrusion product being removed after the extrusion.

13. Imitation wood according to claim 12, with the plastic skin being removed by abrading.

14. Imitation wood according to claim 13, with the abrading being performed with an abrasive material with a grain size in the range of 24 to 60.

15. Imitation wood according to any one of the above claims 10 to 14, the surface of which is painted or glazed.

16. Use of imitation wood according to any one of the claims 10 to 15 as building material, floor material, wall material, ceiling material, for sills, veneers, window sashes, fences, furniture, vehicles or housings for electrical appliances.

17. Method for producing imitation wood according to claim 10 where:
a) 30-40 wt% of PVC resin is mixed in a high-speed mixer with 30-40 wt% of rice shell powder with a particle size of 0.42-0.25 mm (40-60 mesh) and optional filler for 5 minutes at 125 - 140°C,
b) optional additives such as color pigment, stabilizer, processing aids, lubricants are mixed in a small mixer/blender for 10 minutes and then added to the mixture of step a) in the high-speed mixer with the whole mixture being mixed homogeneously for another 10 minutes,
c) the mixture of step b) is left in a cooling tank for about 30 minutes to cool, and
d) the mixture of step c) is extruded with a double or twin-screw extruder at a controlled temperature in the range of 150 - 210°C.

## Revendications

1. Composition pour la fabrication d'une imitation de bois contenant un mélange de 30 - 40 % du poids de résine de PVC et 30 - 40 % du poids de poudre de riz et/ou d'arachide avec une taille de particules de 0,42- 0,25 mm (40 - 60 mesh).

2. Composition pour la fabrication d'une imitation de bois conforme à la revendication 1, où la résine de PVC et la poudre de riz et/ou d'arachide est mélangée dans une proportion d'environ 50:50.

3. Composition pour la fabrication d'une imitation de bois conforme aux revendications 1 ou 2, où le mélange de résine de PVC et/ou de poudre de riz et/ou d'arachide est encore mélangé avec l'un ou plusieurs des adjuvants suivants : liant chimique à base de thermoplast, pigment de couleur, lubrifiant, carbonate de calcium et agent de traitement de PVC.

4. Composition pour la fabrication d'une imitation de bois conforme à l'une des revendications ci-dessus, contenant un mélange de 30 - 40 % du poids de résine de PVC, 30 - 40 % du poids de poudre de riz ou d'arachide avec une taille de particules de 0,420,25 mm (40 - 60 mesh), 8 - 12 % du poids de liant chimique à base de thermoplast, 0,5 - 1 % du poids de pigments, 2-4 % du poids de lubrifiant, 12 - 18 % du poids de carbonate de calcium et 8-12 % du poids d'agent de traitement de PVC.

5. Composition pour la fabrication d'une imitation de bois conforme à la revendication 4, contenant 31-37 % du poids de résine de PVC.

6. Composition pour la fabrication d'une imitation de bois conforme à la revendication 4 ou 5, contenant 33 - 36 du poids de poudre de riz et/ou d'arachide.

7. Composition pour la fabrication d'une imitation de bois conforme à l'une des revendications 4 à 6, contenant 7 - 9 % du poids de liant chimique à base de thermoplast.

8. Composition pour la fabrication d'une imitation de bois conforme à l'une des revendications 4 à 7, contenant 11 - 15 % du poids de carbonate de calcium.

9. Composition pour la fabrication d'une imitation de bois conforme à l'une des revendications ci-dessus, où les particules de résine de PVC et la poudre de riz ou d'arachide présentent à peu près la même grosseur.

10. Imitation de bois, fabriquée par extrusion d'une composition conforme à l'une des revendications ci-dessus.

11. Imitation de bois conforme à la revendication 10, où le produit obtenu par extrusion a la forme d'une plaque ou est profilé.

12. Imitation de bois conforme à la revendication 10 ou 11, où, après l'extrusion, la couche synthétique formée sur le produit extrudé est retirée.

13. Imitation de bois conforme à la revendication 12, où la couche synthétique est retirée par meulage.

14. Imitation de bois conforme à la revendication 13, où le meulage est réalisé à l'aide d'un matériau de meulage présentant une granulation comprise entre 24 et 60.

15. Imitation de bois conforme à l'une des revendications 10 à 14, dont la surface est peinte ou lasurée.

16. Utilisation d'une imitation de bois selon l'une des revendications 10 à 15 comme matériau de construction, matériau de plancher, matériau mural, matériau de couverture, pour les seuils, les placages, les battants de fenêtre, les palissades, le mobilier, les véhicules ou les boîtiers d'appareils électriques.

17. Procédé de fabrication d'une imitation de bois conforme à la revendication 10, où :
a) 30-40 % du poids de résine PVC sont mélangés pendant 5 minutes dans un mélangeur à grande vitesse avec 30-40 % du poids de poudre de riz ayant une taille de particules de 0,42-0,25 mm (40-60 mesh) et le cas échéant une masse de remplissage à une température de 125 à 140 °C,
b) des additifs facultatifs tels que des pigments de couleur, un stabilisateur, un auxiliaire de traitement, un lubrifiant sont mélangés dans un petit mélangeur pendant 10 minutes, après quoi ce mélange est ajouté dans le mélangeur à grande vitesse au mélange résultant de l'étape a), et où ce mélange complet est encore mélangé pendant 10 minutes supplémentaires pour atteindre une composition homogène,
c) le mélange résultant de l'étape b) est refroidi pendant environ 30 minutes dans une cuve de refroidissement, et
d) le mélange résultant de l'étape c) est extrudé dans un extrudeur à double vis ou à vis jumelle à une température régulée comprise entre 150 et 210 ° C.
